# EUROPEAN PATENT APPLICATION

(11) **EP 4 625 962 A1**
(43) Date of publication of application: **01.10.2025**
(21) Application number: 24186284.6
(22) Date of filing: 03.07.2024
(51) Int. Cl.: H04N 1/54, H04N 1/60

(54) **INFORMATION PROCESSING SYSTEM, PROGRAM, AND INFORMATION PROCESSING METHOD**

(30) Priority: 25.03.2024 JP 2024048717
(71) Applicant: FUJIFILM Business Innovation Corp., Minato-ku Tokyo (JP)
(72) Inventor: TAKAISHI, Shinya, Yokohama-shi, Kanagawa (JP); IWAFUCHI, Toshihiro, Yokohama-shi, Kanagawa (JP); KUBO, Masahiko, Yokohama-shi, Kanagawa (JP)
(74) Representative: Kurig, Thomas

(57) **Abstract**

An information processing system includes a memory that stores plural pieces of conversion data for converting RGB values into Lab values, for each combination of plural colors, the plural pieces of conversion data being generated by using a calibration chart including multi-dimensional color patch images consisting of combinations of plural basic colors and multi-dimensional color patch images consisting of combinations of plural colors obtained by replacing any one color of the plural basic colors with a special color other than the basic colors, and a processor configured to select, with respect to RGB values in a case where a patch image in the calibration chart is read by an image reading device, conversion data corresponding to the patch image from among the plural pieces of conversion data stored in the memory, in accordance with combination information indicating which of combination of the plural colors the patch image corresponds to, convert the read RGB values into Lab values by using the selected conversion data, and generate a multi-dimensional LUT for executing calibration by using the converted Lab values.

## Description

### BACKGROUND OF THE INVENTION

### (i) Field of the Invention

The present disclosure relates to an information processing system, a program, and an information processing method.

### (ii) Description of Related Art

JP2000-032284A discloses a color-separated image correction apparatus that corrects a color-separated image signal which is input as an electrical signal to reproduce target colors by using cyan C, magenta M, yellow Y, high chroma colorants, and black K, in which by obtaining combinations of colorants used for image output by performing combination to include at least regions reproduced by combinations of K and two other colors, with respect to printers with many colorants, including special colors, the printer characteristics are estimated using a small number of measurement points, and the combinations of colorants corresponding to the target color are systematically obtained.

JP2015-228579A discloses an image forming apparatus that creates a scanner profile from a first color value in a device-dependent color space obtained by reading a printed material of chart image data with a scanner, a K value of the chart image data, and a second color value in a device-independent color space obtained by color-measuring the printed material with a colorimeter, and enables highly accurate color measurement using the scanner.

### SUMMARY OF THE INVENTION

In order to correct color deviation of a printing device due to a use environment or aging and improve color reproducibility, calibration for performing color correction of an image to be printed is performed. In this calibration, a calibration chart including a plurality of patch images is printed by a printing device, and color values of the plurality of patch images are color-measured by a colorimeter and acquired as color values in a Lab color space (hereinafter, referred to as Lab values). Then, a multi-dimensional look-up table (LUT) for performing multi-dimensional conversion in a CMYK color space such that color values of each patch image are color values expected is created based on the acquired Lab values of the plurality of patch images. Then, since the printing device performs printing by using the created multi-dimensional LUT, the color reproducibility of the image to be printed is improved.

However, in order to color-measure the color values of the plurality of patch images in the calibration chart as the Lab values, a colorimeter is required, and it is laborious to color-measure the color values of the plurality of patch images one by one by the colorimeter. Therefore, the color values of the plurality of patch images are read by an image reading device such as an in-line sensor or a scanner provided in a general image forming apparatus. However, since the color values read by the image reading device are RGB values, it is necessary to prepare conversion data for converting the read RGB values into Lab values in advance.

For this reason, Lab data obtained by color-measuring the color of each patch image in a chart image having a plurality of multi-dimensional color or monochromatic patch images formed by combining a plurality of colors among CMYK colors using a colorimeter, and RGB data read by an image reading device are obtained, and conversion data for converting the RGB values into Lab values is created.

However, in recent years, in order to expand a color gamut of an image to be printed by a printing device, printing has been performed by using colorants of basic colors called CMYK color and colorants of special colors such as fluorescent pink (hereinafter, referred to as P) and fluorescent green (hereinafter, referred to as G). However, in a case where the RGB values obtained by reading each patch image in the chart image in which a plurality of multi-dimensional color patch images including the special color are provided by the image reading device are converted into the Lab values by the conversion data generated based on the chart image including only the patch images of the combination of the basic colors of the CMYK colors, it is not possible to perform the conversion with high accuracy. Even in a case where the conversion data is created based on the chart image including multi-dimensional color patch images consisting of combinations of the basic colors and the special color, it is not possible to perform the conversion with high accuracy as compared with the conversion performed based on the conversion data generated based on the multi-dimensional color patch images consisting of combinations of only the basic color. The reason for this is that, even in a case where the CMY colors obtained by excluding the K color among the CMYK basic colors and the two special colors are combined, the combination of colors is five-dimensional. Therefore, in a case where five-dimensional color values of the multi-dimensional color patch image are converted into three-dimensional color values referred to as RGB, there is a patch image in which the actual Lab values are different but the RGB values are the same. Further, in a case where patch images satisfying the combination of all five-dimensional colors are generated, the number of patch images is enormous, and reading the color values of the patch images will require a huge amount of labor, making it unrealistic.

An object of the present disclosure is to provide an information processing system, a program, and an information processing method capable of converting the RGB values into the Lab values with high accuracy, in a case of calibrating printing using a colorant of a special color other than the CMYK colors which are the basic colors, compared to a case of converting RGB values into Lab values by using conversion data generated based on the multi-dimensional color patch images in which only the basic colors are combined with each other.

According to a first aspect of the present disclosure, there is provided an information processing system including: a memory that stores a plurality of pieces of conversion data for converting RGB values into Lab values, for each combination of a plurality of colors, the plurality of pieces of conversion data being generated by using a calibration chart including multi-dimensional color patch images consisting of combinations of a plurality of basic colors and multi-dimensional color patch images consisting of combinations of a plurality of colors obtained by replacing any one color of the plurality of basic colors with a special color other than the basic colors; and a processor configured to: select, with respect to RGB values in a case where a patch image in the calibration chart is read by an image reading device, conversion data corresponding to the patch image from among the plurality of pieces of conversion data stored in the memory, in accordance with combination information indicating which of combination of the plurality of colors the patch image corresponds to; convert the read RGB values into Lab values by using the selected conversion data; and generate a multi-dimensional LUT for executing calibration by using the converted Lab values.

According to a second aspect of the present disclosure, in the information processing system according to the first aspect, the multi-dimensional color patch images consisting of combinations of the plurality of basic colors may be three or less dimensional color patch images consisting of combinations of CMY colors, and the multi-dimensional color patch images consisting of combinations of a plurality of colors obtained by replacing any one color of the plurality of basic colors with a special color may be three or less dimensional color patch images consisting of combinations of three colors obtained by replacing any one color of the CMY colors with a special color other than the CMYK colors.

According to a third aspect of the present disclosure, in the information processing system according to the second aspect, the plurality of pieces of conversion data may include conversion data generated based on color values of a monochromatic color patch image of each of CMYK basic colors and special colors.

According to a fourth aspect of the present disclosure, in the information processing system according to any one of the first to third aspects, the combination information may include page information indicating a page of the calibration chart of the patch image, position information indicating a position on the page, and colorant concentration information in a case where the patch image is output.

According to a fifth aspect of the present disclosure, in the information processing system according to the first aspect, the processor may be configured to: generate a three or less dimensional color combination portion among the combinations of the basic colors and the special colors, based on the Lab values, in a case of generating the multi-dimensional LUT by using the Lab values converted by using the selected conversion data.

According to a sixth aspect of the present disclosure, in the information processing system according to the fifth aspect, the processor may be configured to: generate a portion of a K color among the basic colors, based on the Lab values of a monochromatic color patch image, in a case of generating the multi-dimensional LUT by using the Lab values converted by using the selected conversion data.

According to a seventh aspect of the present disclosure, there is provided a program causing a computer to execute: storing a plurality of pieces of conversion data for converting RGB values into Lab values, for each combination of a plurality of colors, the plurality of pieces of conversion data being generated by using a calibration chart including multi-dimensional color patch images consisting of combinations of a plurality of basic colors and multi-dimensional color patch images consisting of combinations of a plurality of colors obtained by replacing any one color of the plurality of basic colors with a special color other than the basic colors; selecting, with respect to RGB values in a case where a patch image in the calibration chart is read by an image reading device, conversion data corresponding to the patch image from among the plurality of pieces of stored conversion data, in accordance with combination information indicating which of combination of the plurality of colors the patch image corresponds to; converting the read RGB values into Lab values by using the selected conversion data; and generating a multi-dimensional LUT for executing calibration by using the converted Lab values.

According to an eighth aspect of the present disclosure, there is provided an information processing method including: storing a plurality of pieces of conversion data for converting RGB values into Lab values, for each combination of a plurality of colors, the plurality of pieces of conversion data being generated by using a calibration chart including multi-dimensional color patch images consisting of combinations of a plurality of basic colors and multi-dimensional color patch images consisting of combinations of a plurality of colors obtained by replacing any one color of the plurality of basic colors with a special color other than the basic colors; selecting, with respect to RGB values in a case where a patch image in the calibration chart is read by an image reading device, conversion data corresponding to the patch image from among the plurality of pieces of stored conversion data, in accordance with combination information indicating which of combination of the plurality of colors the patch image corresponds to; converting the read RGB values into Lab values by using the selected conversion data; and generating a multi-dimensional LUT for executing calibration by using the converted Lab values.

According to the information processing system of a first aspect of the present disclosure, in a case of calibrating printing using a colorant of a special color other than the CMYK colors which are the basic colors, it is possible to convert the RGB values into the Lab values with high accuracy, compared to a case of converting RGB values into Lab values by using conversion data generated based on multi-dimensional color patch images in which only the basic colors are combined with each other.

According to the information processing system of a second aspect of the present disclosure, it is possible to suppress each patch image in the calibration chart to a three or less dimensional color combination.

According to the information processing system of a third aspect of the present disclosure, the accuracy of the image formed by the monochromatic color colorant can be managed separately from the accuracy of the image formed by the multi-dimensional color colorant.

According to the information processing system of a fourth aspect of the present disclosure, the conversion data to be selected can be automatically specified in a case where the color values of each patch image in the calibration chart are read by the image reading device.

According to the information processing system of a fifth aspect of the present disclosure, it is possible to generate a multi-dimensional LUT even in a case where the Lab values of the patch images of all the combinations of the basic colors and the special colors are not present.

According to the information processing system of a sixth aspect of the present disclosure, even in a case where the Lab values of the multi-dimensional color patch image consisting of the combination of the K color and the special color are not present in the basic color, it is possible to generate the multi-dimensional LUT.

According to the program of a seventh aspect of the present disclosure, in a case of calibrating printing using a colorant of a special color other than the CMYK colors which are the basic colors, it is possible to convert the RGB values into the Lab values with high accuracy, compared to a case of converting RGB values into Lab values by using conversion data generated based on multi-dimensional color patch images in which only the basic colors are combined with each other.

According to the information processing method of an eighth aspect of the present disclosure, in a case of calibrating printing using a colorant of a special color other than the CMYK colors which are the basic colors, it is possible to convert the RGB values into the Lab values with high accuracy, compared to a case of converting RGB values into Lab values by using conversion data generated based on multi-dimensional color patch images in which only the basic colors are combined with each other.

### BRIEF DESCRIPTION OF THE DRAWINGS

Exemplary embodiment(s) of the present invention will be described in detail based on the following figures, wherein:
Fig. 1 is a diagram showing a system configuration of an image forming system according to an exemplary embodiment of the present disclosure;
Fig. 2 is a cross-sectional view showing a structure of an image forming apparatus 20 that is a target apparatus on which calibration is executed;
Fig. 3 is a diagram showing a hardware configuration of a terminal apparatus 10 in the image forming system according to the exemplary embodiment of the present disclosure;
Fig. 4 is a block diagram showing a functional configuration of the terminal apparatus 10 in the image forming system according to the exemplary embodiment of the present disclosure;
Fig. 5 is a diagram showing a state where calibration is executed by using a colorimeter 40 in the terminal apparatus 10;
Fig. 6 is a diagram for explaining advance preparation in a case where calibration is executed without using the colorimeter 40;
Fig. 7 is a diagram for explaining a flow of a process when calibration is actually executed in a case where calibration is executed without using the colorimeter 40;
Fig. 8 is a diagram for explaining advance preparation in a case where calibration is executed on the image forming apparatus 20 using special colors (PG);
Fig. 9 is a diagram for explaining a flow of a process when calibration is actually executed in a case where calibration is executed on the image forming apparatus 20 using special colors (PG);
Fig. 10 is a diagram showing patch image examples with different toner coverages but the same read RGB values;
Fig. 11 is a flowchart for explaining a flow of a process in a case of advance preparation for calibration for generating conversion data in the terminal apparatus 10 according to the exemplary embodiment of the present disclosure;
Fig. 12 is a diagram showing a configuration example of patch images in a calibration chart in a case of CMYK+P colors;
Fig. 13 is a diagram showing a calibration chart example including patch images of CMYK+P colors;
Fig. 14 is a diagram showing an example of combination information of patch images;
Fig. 15 is a diagram showing an example of combination information of patch images;
Fig. 16 is a diagram showing another example of combination information of patch images;
Fig. 17 is a diagram showing a state where a plurality of pieces of conversion data generated by a conversion data generation unit 31 are stored in a conversion data storage unit 32;
Fig. 18 is a flowchart for explaining a flow of a process in a case where calibration is executed in the terminal apparatus 10 according to the exemplary embodiment of the present disclosure;
Fig. 19 is a diagram showing a correspondence example between combinations of colors of patch images and conversion data in a case of CMYK+P colors;
Fig. 20 is a diagram showing a state where patch images obtained by combining colors are converted into Lab values by using CMY conversion data 41, MPC conversion data 42, YPM conversion data 43, CYP conversion data 44, and monochromatic color conversion data 45;
Fig. 21 is a diagram showing a multi-dimensional LUT example generated in a case of CMYK+P colors;
Fig. 22 is a diagram showing a correspondence example between combinations of colors of patch images and conversion data in a case of CMYK+P+G colors; and
Fig. 23 is a diagram showing a multi-dimensional LUT example generated in a case of CMYK+P+G colors.

### DETAILED DESCRIPTION OF THE INVENTION

Hereinafter, an exemplary embodiment of the present disclosure will be described in detail with reference to the drawings.

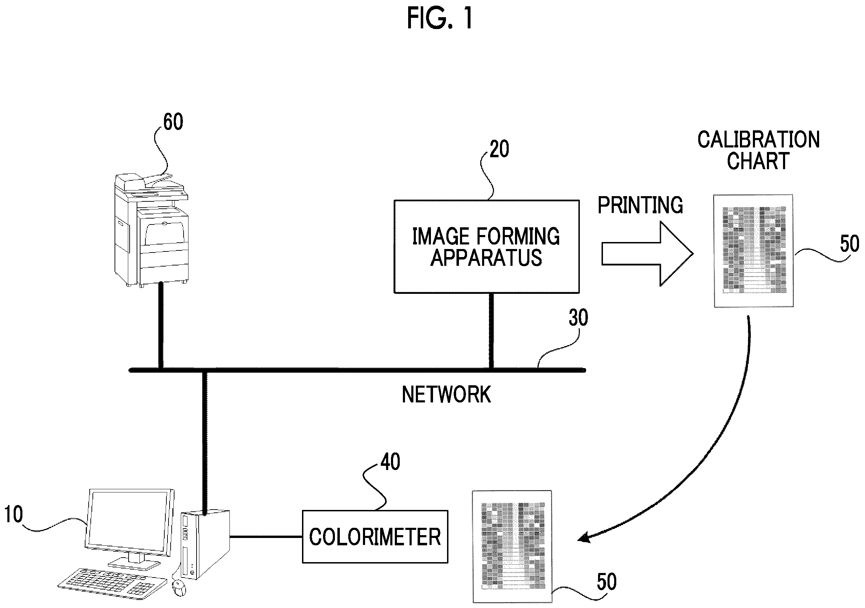

Fig. 1 is a diagram showing a system configuration of an image forming system according to an exemplary embodiment of the present disclosure.

As shown in Fig. 1, an image forming system according to the present exemplary embodiment includes an image forming apparatus 20, an image forming apparatus 60, and a terminal apparatus 10 that are connected to each other via a network 30, and a colorimeter 40 connected to the terminal apparatus 10. The image forming apparatus 20 is, for example, a so-called production printer used for printing for business use, and has a function of being capable of executing high-speed printing process with high image quality. In addition, the image forming apparatus 60 is an apparatus referred to as a so-called multifunction peripheral having a plurality of functions such as a printing function, a scanning function, a copying function, and a facsimile function.

The color of the image printed by the image forming apparatus 20 changes due to various factors such as environmental conditions where the image forming apparatus 20 is installed, aging of the image forming apparatus 20, and variations of the apparatus. Therefore, the color reproduction of the image printed by the image forming apparatus 20 is corrected, and calibration is executed such that the color values of the image to be printed are target color values.

In a case of executing the calibration, first, the image forming apparatus 20 prints a calibration chart 50 including the plurality of patch images. Then, the color values of each patch image of the printed calibration chart 50 are color-measured by a colorimeter 40, and the color value is input to the terminal apparatus 10. Then, the terminal apparatus 10 creates a multi-dimensional look up table (LUT) in which the color values of the color-patched image are target color values, and the created multi-dimensional LUT is installed in the image forming apparatus 20. Then, the image forming apparatus 20 corrects the instructed CMYK values based on the installed multi-dimensional LUT, and executes the printing process by using the corrected CMYK values, so that the color values of the printed image approach the target color values.

Here, the color value color-measured by the colorimeter 40 is generally expressed by a color space called L*a*b* defined by the International Commission on Illumination (CIE). In the following description, the values in the L*a*b* color space will be simply described as Lab values.

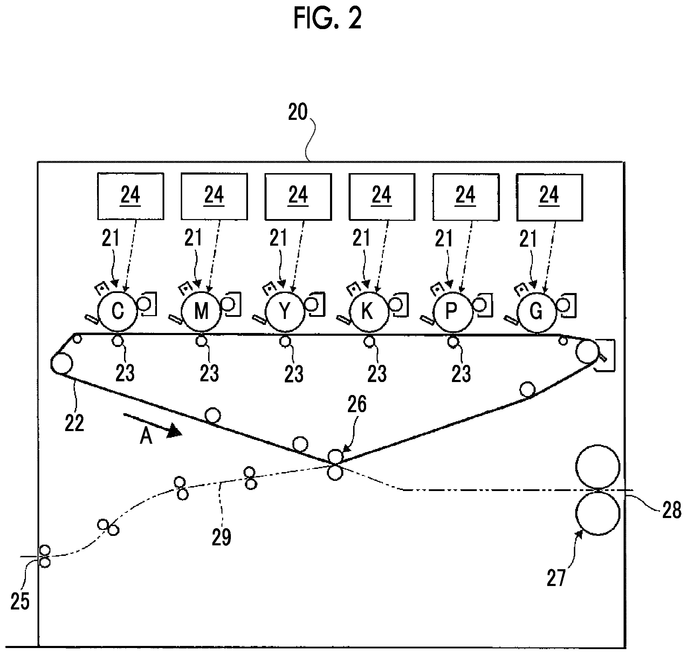

Next, a structure of the image forming apparatus 20, which is a target apparatus executing calibration, will be described with reference to Fig. 2.

As shown in Fig. 2, the image forming apparatus 20 includes six image forming units 21. The six image forming units 21 are configured to form an image on a recording medium by using basic color toners of yellow (Y), magenta (M), cyan (C), and black (K) and two special color (fluorescent pink (P) and fluorescent green (G)) toners.

The image forming unit 21 is configured with a photosensitive drum, a charging device that uniformly charges a surface of the photosensitive drum, a developing device that develops the electrostatic latent image formed on the photosensitive drum, and a cleaning device. The photosensitive drum is a cylindrical image holder that holds a toner image (developer image), and is uniformly charged by the charging device. An electrostatic latent image is formed thereon with laser light emitted by an optical scanning device 24. The electrostatic latent image formed on the photosensitive drum is developed with a toner from the developing device and is transferred to an intermediate transfer belt 22. Residual toners, paper dust, and the like adhered to the photosensitive drum after a toner image transfer step are removed by the cleaning device.

The image forming unit 21 is provided close to the intermediate transfer belt 22. The intermediate transfer belt 22 is configured to be rotationally movable in a direction of an arrow A in Fig. 2. Each primary transfer roll 23 is disposed at a position facing the photosensitive drum with the intermediate transfer belt 22 interposed therebetween. The primary transfer roll 23 is provided to transfer the toner image of each color formed on the photosensitive drum to the intermediate transfer belt 22.

A transport path 29 for transporting the recording medium is formed below the intermediate transfer belt 22. A plurality of transport rolls that transport the recording medium from a carrying-in port 25 to a discharge port 28 are provided in the transport path 29. In addition, in the transport path 29, a secondary transfer device 26 that performs secondary transfer of the toner image primary-transferred from the photosensitive drum to the intermediate transfer belt 22 to the recording medium transported in the transport path 29 is provided. A fixing device 27 is provided on the downstream side of the recording medium transport direction of the secondary transfer device 26. The fixing device 27 is a device for fixing the image formed by the plurality of image forming units 21 on the recording medium by heating the image, and fixes the image of the recording medium to which the toner image is transferred to the recording medium by heat and pressure. The recording medium on which the image has been fixed by the fixing device 27 is discharged from the discharge port 28.

As described above, the image forming apparatus 20 performs printing using the toners of special colors of PG, in addition to toners of normal colors of CMYK. Therefore, the terminal apparatus 10 needs to perform calibration such that the color values of an image printed using the toners of the normal colors and the toners of the special colors are target values.

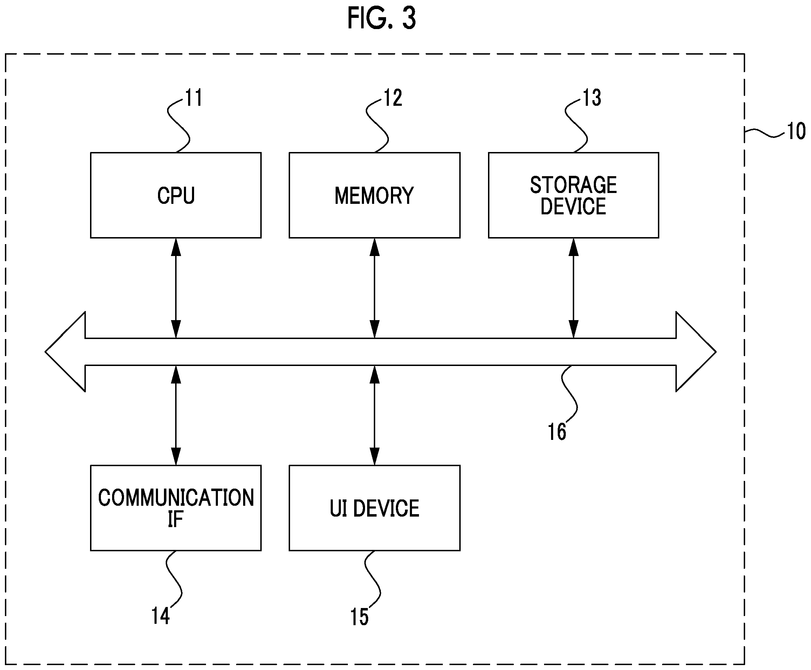

Next, a hardware configuration of the terminal apparatus 10 in the image forming system of the present exemplary embodiment is shown in Fig. 3.

As shown in Fig. 3, the terminal apparatus 10 includes a CPU 11, a memory 12, a storage device 13 such as a hard disk drive, a communication interface (IF) 14 for transmitting and receiving data to and from external devices via the network 30, and a user interface (UI) device 15 including a touch panel or a liquid crystal display and a keyboard. These constituents are connected to each other via a control bus 16.

The CPU 11 is a processor that controls the operation of the terminal apparatus 10 by executing a predetermined process based on a control program stored in the memory 12 or the storage device 13. In the present exemplary embodiment, the description has been made in which the CPU 11 reads out and executes the control program stored in the memory 12 or the storage device 13, but the present disclosure is not limited thereto. The control program may be provided in a form recorded on a computer-readable recording medium. For example, the program may be provided in a form of being recorded on an optical disk such as a compact disc (CD)-ROM and a digital versatile disc (DVD)-ROM, or in a form of being recorded on a semiconductor memory such as a universal serial bus (USB) memory and a memory card. Further, the control program may be acquired from an external device via a communication line connected to the communication interface 14. Further, the control program may be provided, for example, as single application software or may be incorporated, as one function of the terminal apparatus 10, in software of each apparatus.

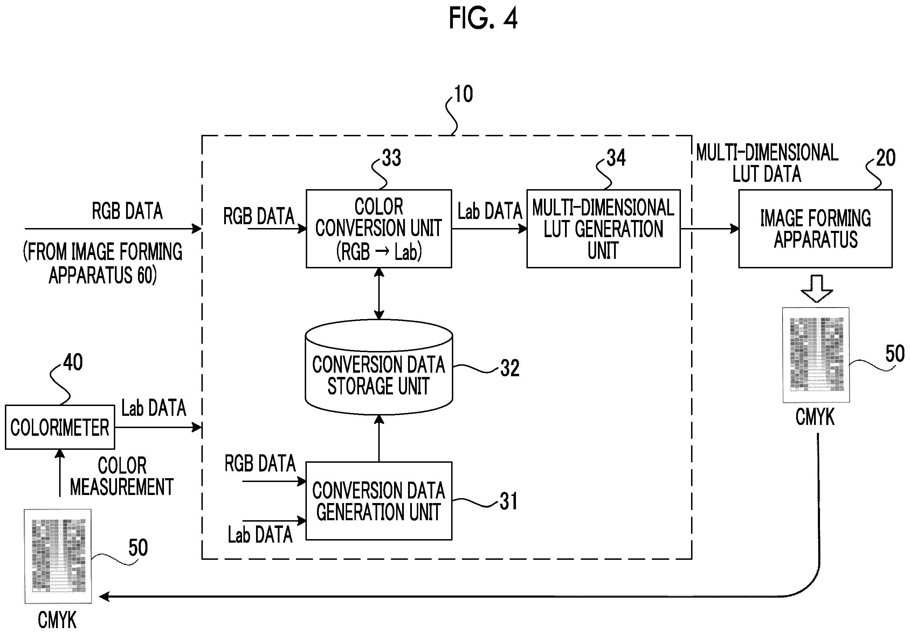

Fig. 4 is a block diagram showing a functional configuration of the terminal apparatus 10 realized by executing the above control program.

As shown in Fig. 4, the terminal apparatus 10 according to the present exemplary embodiment includes a conversion data generation unit 31, a conversion data storage unit 32, a color conversion unit 33, and a multi-dimensional LUT generation unit 34. In addition, in Fig. 4, only a part related to the execution of the calibration in the functional configuration of the terminal apparatus 10 is shown. In addition, in Fig. 4, a case where calibration is executed using the calibration chart 50 consisting of combinations of CMYK colors is shown.

Before describing the calibration in a case of performing printing using a toner of a special color in addition to the toners of normal colors by the terminal apparatus 10 according to the present exemplary embodiment, first, calibration in a case of performing printing using the toners of CMYK colors, which are normal colors, will be described.

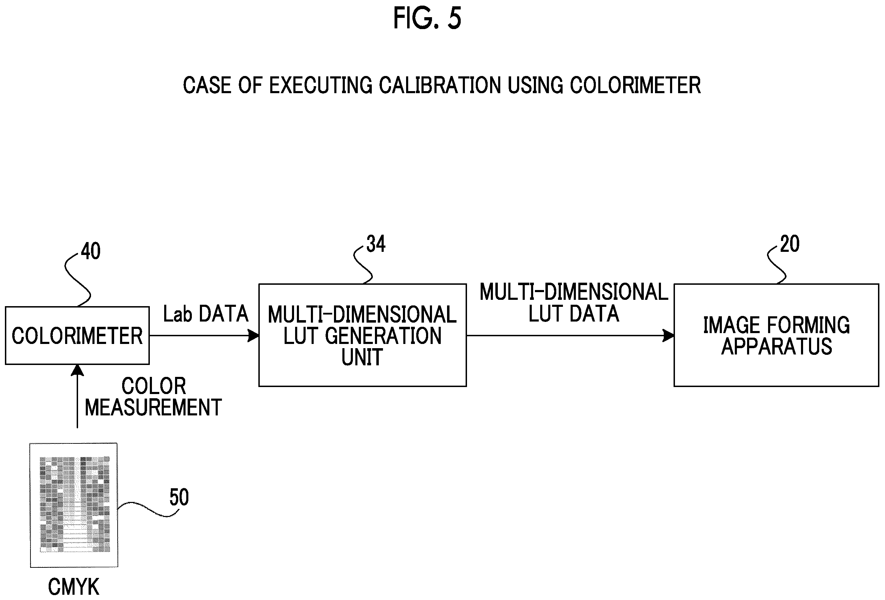

Here, Fig. 5 shows a state where the terminal apparatus 10 executes calibration using the colorimeter 40.

As shown in Fig. 5, in a case where color measurement is performed every time calibration is performed by using the colorimeter 40, the image forming apparatus 20 may print the calibration chart 50 and the colorimeter 40 may perform color measurement. In this case, the multi-dimensional LUT generation unit 34 generates the multi-dimensional LUT by using Lab data consisting of color values of each patch image in the calibration chart 50 color-measured by the colorimeter 40. Then, in a case where the multi-dimensional LUT generated by the multi-dimensional LUT generation unit 34 is installed in the image forming apparatus 20, the calibration for the image forming apparatus 20 is completed.

However, in order to color-measure the color values of the plurality of patch images in the calibration chart 50 as the Lab values, the colorimeter 40 is required, and it is laborious to measure the color values of the plurality of patch images one by one by the colorimeter 40. In a case where the number of patch images increases, the labor required to color-measure the color values of each patch image using the colorimeter 40 becomes enormous. In a case where the calibration of the image forming apparatus 20 is performed periodically, such a huge amount of labor is required every time the calibration is performed. Therefore, the color values of the plurality of patch images are read by an image reading device such as an in-line sensor or a scanner provided in the general image forming apparatus 60. In a case where the color values of the respective patch images are acquired by the image reading device, only the labor of scanning the entire calibration chart 50 is required. However, since the color values read by the image reading device are RGB values, it is necessary to prepare conversion data for converting the read RGB values into Lab values in advance.

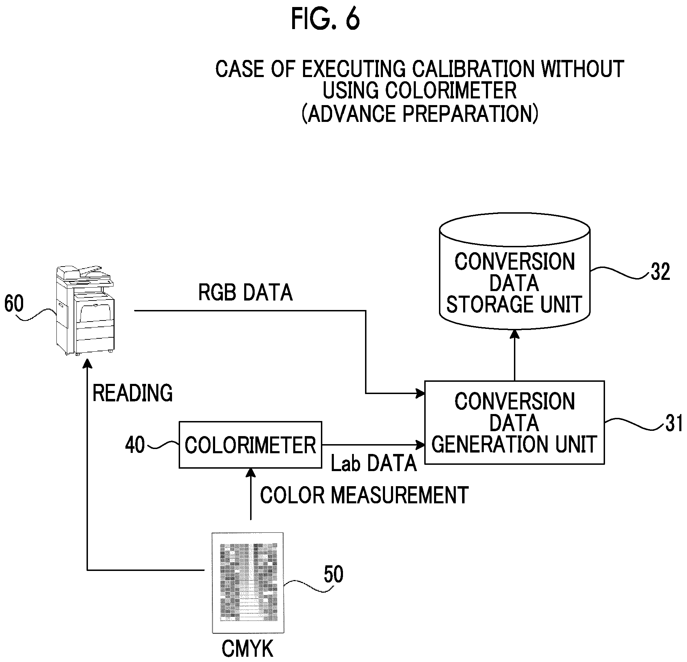

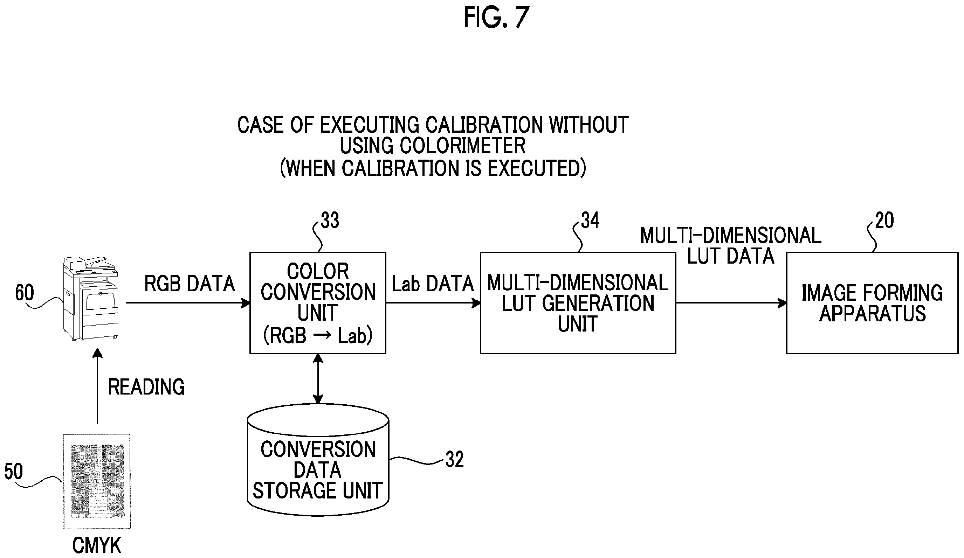

Next, a process in a case where the calibration is executed without using the colorimeter 40 will be described with reference to Figs. 6 and 7.

Fig. 6 is a diagram for explaining advance preparation in a case where calibration is executed without using the colorimeter 40. Fig. 7 is a diagram for explaining the flow of a process when calibration is actually executed in a case where calibration is executed without using the colorimeter 40.

In the advance preparation for the calibration without using the colorimeter 40, as shown in Fig. 6, first, the Lab data obtained by color-measuring the calibration chart 50 with the colorimeter 40 and the RGB data obtained by reading the same calibration chart 50 with the image reading device of the image forming apparatus 60 are input to the conversion data generation unit 31. Then, the conversion data generation unit 31 generates conversion data for predicting Lab data from the input RGB data by a method such as weighted linear regression and stores the generated conversion data in the conversion data storage unit 32.

Next, when calibration is actually executed, as shown in Fig. 7, the image forming apparatus 20 prints the calibration chart 50, and the printed calibration chart 50 is read by the image reading device of the image forming apparatus 60 to acquire RGB data. Then, the color conversion unit 33 converts the acquired RGB data into Lab data, by using the conversion data stored in advance in the conversion data storage unit 32. Moreover, the multi-dimensional LUT generation unit 34 generates a multi-dimensional LUT by using the Lab data converted by the color conversion unit 33, and installs the generated multi-dimensional LUT in the image forming apparatus 20.

The calibration can be executed without using the colorimeter 40 when calibration is executed actually as shown in Fig. 7, simply by using the colorimeter 40 only in the advance preparation stage by performing such a process.

However, in a case where the calibration without using such a colorimeter is similarly applied to the image forming apparatus 20 that performs printing using toners of special colors in addition to toners of normal colors of CMYK, problems arise in that it is not possible to execute high-accuracy calibration, as well as the problem that it takes an enormous amount of labor to generate conversion data in advance.

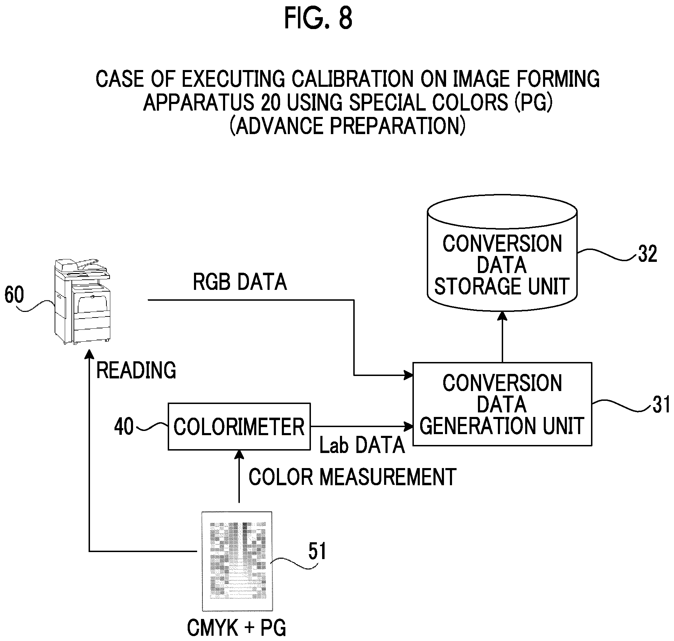

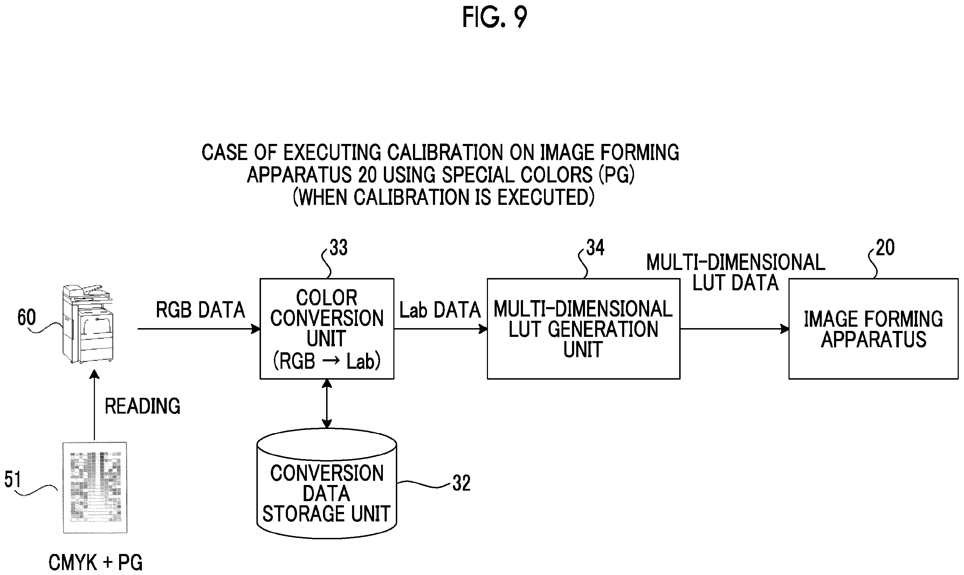

Specifically, a case where two colors of PG are added as the special colors to the normal colors of CMYK will be described. The advance preparation in a case where calibration is executed on the image forming apparatus 20 using special colors (PG) in this way will be described with reference to Fig. 8. In addition, a flow of a process when calibration is actually executed in a case where calibration is executed on the image forming apparatus 20 using the special colors (PG) will be described with reference to Fig. 9.

Even in the advance preparation in a case of executing the calibration on the image forming apparatus 20 using the special colors (PG), as shown in Fig. 8, the Lab data obtained by color-measuring the calibration chart 51 including dimensional color patch images in which the normal colors CMYK and the special colors PG are combined by the colorimeter 40 and the RGB data obtained by reading the same calibration chart 51 by the image reading device of the image forming apparatus 60 are input to the conversion data generation unit 31. Then, the conversion data generation unit 31 generates conversion data for predicting Lab data from the input RGB data by a method such as weighted linear regression, and stores the conversion data in the conversion data storage unit 32.

In a case where calibration is actually executed, as shown in Fig. 9, the image forming apparatus 20 prints a calibration chart 51 including dimensional color patch images in which the normal colors CMYK and the special colors PG are combined, and the printed calibration chart 51 is read by the image reading device of the image forming apparatus 60 to acquire RGB data. Then, the color conversion unit 33 converts the acquired RGB data into Lab data, by using the conversion data stored in advance in the conversion data storage unit 32. Moreover, the multi-dimensional LUT generation unit 34 generates a multi-dimensional LUT by using the Lab data converted by the color conversion unit 33, and installs the generated multi-dimensional LUT in the image forming apparatus 20.

In a case where the processes shown in Figs. 8 and 9 are applied in the same manner as in a case where only the normal colors CMYK are used, the calibration cannot be executed with high accuracy. The reason why the accuracy of calibration deteriorates in a case where the processes in a case where only the CMYK colors are used are simply applied to a case where the CMYK+PG colors are used will be described below.

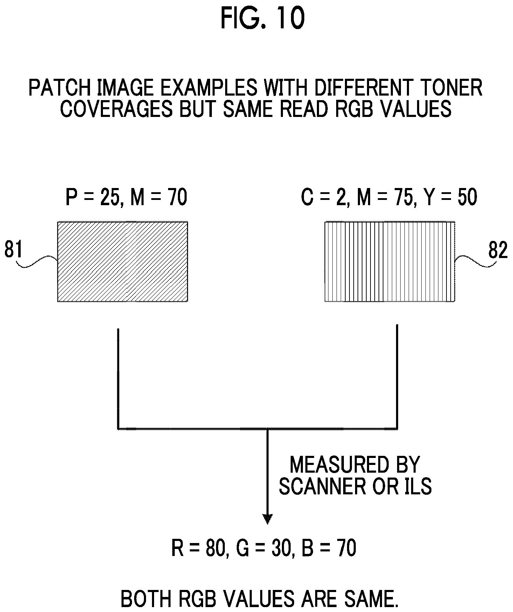

For example, in a case where three colors of CMY excluding K color which is an achromatic color and two colors of special colors PG are combined, combinations of five colors are obtained. That is, in the calibration chart 51, five-dimensional color patch images are created. In a case where the calibration chart 51 including the patch images of the five-dimensional colors is read by the image reading device of the image forming apparatus 60 and converted into RGB data, as shown in Fig. 10, there is a patch image in which the toner coverages are different, that is, the actual Lab values are different, but the read RGB values are the same. In Fig. 10, patch images 81 has a toner coverage of P = 25% and M = 70%, and patch images 82 has a toner coverage of C = 2%, M = 75%, and Y = 50%. However, it can be seen that all the RGB values of both patch images 81 and 82 are R = 80, G = 30, and B = 70 and are the same. Such a phenomenon occurs because the five-dimensional color combinations are converted into the three-dimensional RGB values. In a case where the RGB values are expressed in 8 bits, the RGB values are expressed by values of 0 to 255.

Here, the toner coverage means an amount of the toner used per unit area on a recording medium, for example, a toner weight (g/m²). However, in the following description, the toner coverage is expressed by a value indicating a ratio of the amount of each color toner used for printing as a percentage, in a case where the maximum value of the amount of each color toner used per unit area, for example, per pixel is 100%.

As described above, the conversion accuracy of the conversion data generated based on the RGB values obtained in this manner is worse than the conversion accuracy of the conversion data generated in a case where only the three colors of CMY are used.

Further, in a case where the three colors of CMY are used, for example, 5 × 5 × 5 = 125 patch images may be prepared even by expressing each color in five gradations of 0, 25, 50, 75, and 100% and combining all gradations with each other. However, in a case where patch images are generated by using combinations of five colors obtained by adding two colors of PG to three colors of CMY, and each color is similarly expressed in five gradations of 0, 25, 50, 75, and 100% and all gradations are combined, a large number of patch images of 5 × 5 × 5 × 5 × 5 = 3125 are required. In a case where such a calibration chart including a large number of patch images is created, the number of calibration charts will be enormous, and the amount of labor required to color-measure the color of each patch image with a colorimeter will also be enormous. Further, the labor and time for creating conversion data for converting the RGB values into the Lab values is also enormous and not realistic.

However, in a case where the RGB values obtained by reading patch images in which the special colors of PG are combined in addition to the basic colors of CMYK are converted into the Lab values by using the conversion data generated based on a multi-dimensional color patch image in which only the basic colors of CMYK are combined, the prediction accuracy of the Lab values deteriorates, and high-accuracy calibration cannot be performed.

Therefore, in the terminal apparatus 10 according to the present exemplary embodiment, by executing calibration as described below, in a case of performing calibration of printing using toners of special colors other than the CMYK colors which are the basic colors, the execution of high-accuracy calibration is implemented by converting the RGB values of the read patch image into the Lab values with high accuracy as compared with a case of converting the RGB values into the Lab values by using conversion data generated based on a multi-dimensional color patch image in which only the basic colors are combined.

In the present exemplary embodiment, the conversion data storage unit 32 stores, for each combination of a plurality of colors, a plurality of pieces of conversion data for converting the RGB values into the Lab values, which are generated by using a calibration chart including multi-dimensional color patch images consisting of a combination of a plurality of basic colors and multi-dimensional color patch images consisting of a combination of a plurality of colors obtained by replacing any one color among the plurality of basic colors CMY with special colors PG other than the basic colors.

Then, with respect to the RGB values in a case where the patch image in the calibration chart is read by an image reading device, the color conversion unit 33 selects conversion data corresponding to the patch image from among the plurality of pieces of conversion data stored in the conversion data storage unit 32, in accordance with combination information indicating which combination of a plurality of colors the patch image corresponds to. Then, the color conversion unit 33 converts the read RGB values into Lab values by using the selected conversion data. Then, the multi-dimensional LUT generation unit 34 generates a multi-dimensional LUT for executing calibration using the converted Lab values.

Here, the multi-dimensional color patch image consisting of a combination of a plurality of basic colors is, specifically, a three or less dimensional color patch image consisting of a combination of CMY colors. Then, multi-dimensional color patch images consisting of a combination of a plurality of colors in which any one of the plurality of basic colors is replaced with a special color is a three or less dimensional color patch image consisting of a combination of three colors in which any one of the CMY colors is replaced with a special color other than the CMYK color.

The plurality of pieces of conversion data include conversion data generated based on the color values of monochromatic color patch images of each of the CMYK basic colors and the special colors.

In addition, the combination information indicating which combination of the plurality of colors the patch image corresponds to can include page information indicating a page in the calibration chart of the patch image, position information indicating a position on the page, and information of toner coverage which is colorant concentration information in a case where the patch image is output.

In a case where the multi-dimensional LUT is generated by using the Lab values converted by using the conversion data selected in the color conversion unit 33, the multi-dimensional LUT generation unit 34 generates a combination of three or less dimensional colors on the basis of the Lab values among combinations of the basic colors and the special colors.

Then, in a case of generating the multi-dimensional LUT by using the Lab values converted by using the conversion data selected in the color conversion unit 33, the multi-dimensional LUT generation unit 34 generates a portion of the K color among the basic colors, based on the Lab values of a monochromatic color patch image.

Next, an operation in a case of executing calibration in printing using special colors in addition to the CMYK basic colors in the terminal apparatus 10 according to the present exemplary embodiment will be described in detail with reference to the drawings. In the following description, a case where calibration is executed in a case of printing using P color as a special color in addition to CMYK basic colors will be described for simplicity of description.

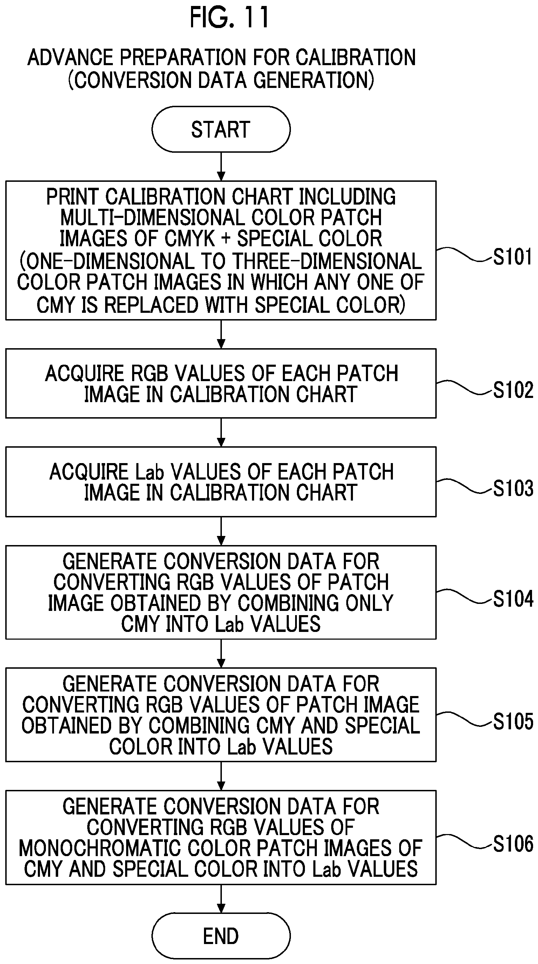

First, a flow of a process in a case of advance preparation for calibration for generating conversion data in the terminal apparatus 10 according to the present exemplary embodiment will be described with reference to the flowchart of Fig. 11.

In step S101, the terminal apparatus 10 gives an instruction to the image forming apparatus 20 to print a calibration chart including multi-dimensional color patch images of CMYK + special color (P). Specifically, the terminal apparatus 10 gives an instruction to the image forming apparatus 20 to print a calibration chart including one to three-dimensional color patch images in which any one color of CMY is replaced with the special color P.

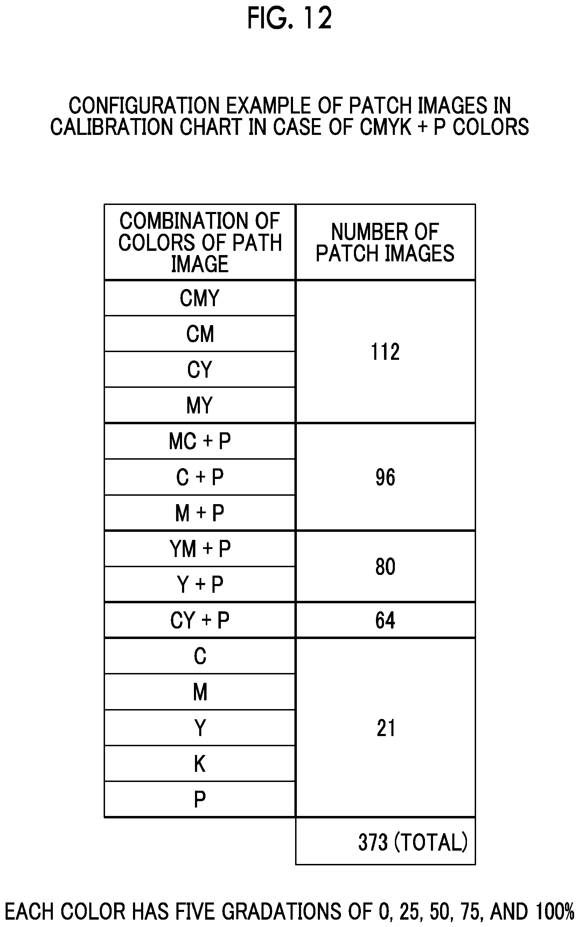

Fig. 12 shows a configuration example of patch images in the calibration chart in a case of CMYK+P colors. In Fig. 12, a case is assumed where each color has five gradations of toner coverages of 0%, 25%, 50%, 75%, and 100%. In this case, a method of calculating the number of patch images generated will be described below for the following cases (1) to (5).
(1) Patch images of two-dimensional color and three-dimensional color using CMY basic colors
   In this case, since there are five gradations for each of the three colors of CMY, all combinations are 5 × 5 × 5 = 125 patch images. However, monochromatic color images of CMY (other than 0%), that is, 12 patch images of three colors × four gradations and one patch image in which CMY are all 0% are subtracted. That is, the number of patch images that match the condition is 125 - 12 - 1 = 112.
(2) Patch images of two-dimensional color and three-dimensional color using MC + P colors
   In this case, since there are five gradations for each of the three colors of the MCP, all combinations are 5 × 5 × 5 = 125 patch images. However, the 16 patch images of the two-dimensional colors of MC overlap with the above case (1). In addition, monochromatic color images of MCP (other than 0%), that is, 12 patch images of three colors × four gradations and one patch image in which MCP are all 0% are subtracted. That is, the number of patch images that match the condition is 125 - 16 - 12 - 1 = 96.
(3) Patch images of two-dimensional color and three-dimensional color using YM+P colors
   In this case, since there are five gradations for each of the three colors of the YMP, all combinations are 5 × 5 × 5 = 125 patch images. However, the 16 patch images of the two-dimensional colors of YM overlap with the above case (1). In addition, the 16 patch images of the two-dimensional colors of MP overlap with the above case (2). Furthermore, monochromatic color images of YMP (other than 0%), that is, 12 patch images of three colors × four gradations and one patch image in which YMP are all 0% are subtracted. That is, the number of patch images that match the condition is 125 - 16 - 16 - 12 - 1 = 80.
(4) Patch images of two-dimensional color and three-dimensional color using CY+P colors
   In this case, since there are five gradations for each of the three colors of the CYP, all combinations are 5 × 5 × 5 = 125 patch images. However, the 16 patch images of the two-dimensional colors of CY overlap with the above case (1). In addition, the 16 patch images of the two-dimensional colors of CP overlap with the above case (2). Further, the 16 patch images of the two-dimensional colors of YP overlap with the above case (3). Then, monochromatic color images of CYP (other than 0%), that is, 12 patch images of three colors × four gradations and one patch image in which CYP are all 0% are subtracted. That is, the number of patch images that match the condition is 125 - 16 - 16 - 16 - 12 - 1 = 64.
(5) monochromatic color patch images of CMYK+P colors
   In this case, the five colors of CMYKP have four gradations (25, 50, 75, and 100%), and one patch image in which CMYKP are all 0% is further included. Therefore, the number of patch images that match the condition is 5 × 4 + 1 = 21.

The total number of patch images having the configuration shown in Fig. 12 in this way is 112 + 96 + 80 + 64 + 21 = 373. That is, it can be seen that the total number of patch images can be significantly reduced as compared with the total number of patch images of all combinations of 5 gradations for each of 5 colors of CMYK+P, which is 5 × 5 × 5 × 5 × 5 = 3125.

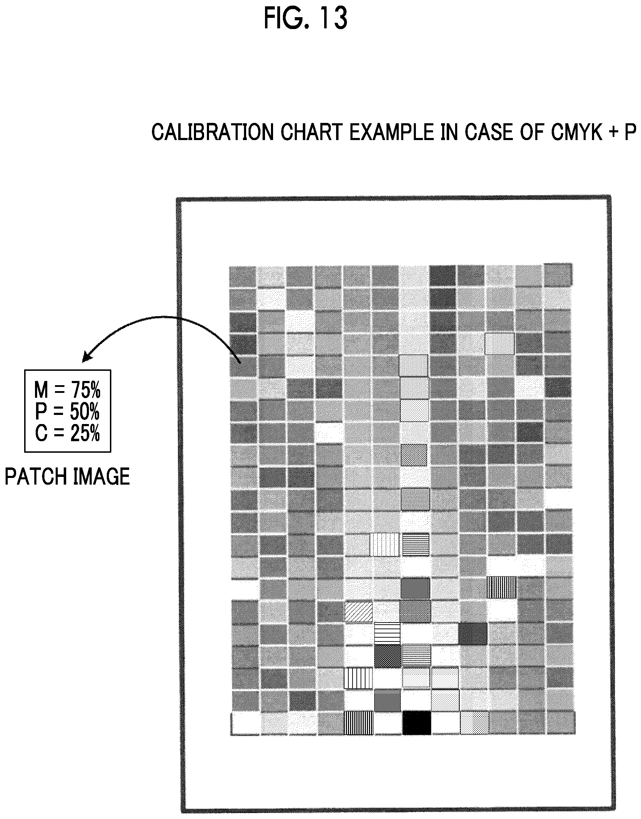

Fig. 13 shows an example of a calibration chart including patch images of CMYK+P colors configured in this manner.

In the calibration chart shown in Fig. 13, each patch image is made up of a monochromatic color, a two-dimensional color, and a three-dimensional color. For example, Fig. 13 shows that a certain patch image is made up of a three-dimensional color of M = 75%, P = 50%, and C = 25%.

Next, in step S102, the conversion data generation unit 31 acquires RGB data obtained by reading the calibration chart printed by the image forming apparatus 20 by the image reading device of the image forming apparatus 60 to acquire the RGB values of each patch image.

Next, in step S103, the conversion data generation unit 31 acquires Lab data obtained by color-measuring the calibration chart printed by the image forming apparatus 20 with the colorimeter 40 to acquire the Lab values of each patch image.

Moreover, in step S104, the conversion data generation unit 31 generates conversion data for converting RGB values of patch images obtained by combining only CMY into Lab values, based on the RGB values and Lab values of the patch image made up of two-dimensional color or three-dimensional colors of CMY

Moreover, in step S105, the conversion data generation unit 31 generates conversion data for converting RGB values of patch images obtained by combining CMY and a special color into Lab values, based on the RGB values and the Lab values of the patch image made up of two-dimensional color or three-dimensional color obtained by combining CMY and the special color.

Finally, in step S106, the conversion data generation unit 31 generates conversion data for converting the RGB values of the monochromatic color patch images of the CMY and the special color into the Lab values, based on the RGB values and the Lab values of the monochromatic color patch images of the CMY and the special color.

Here, in a case where the calibration chart is generated, combination information indicating which combination of the plurality of colors each patch image corresponds to is generated and recorded. The conversion data generation unit 31 and the color conversion unit 33 associate the acquired RGB data with the combination information to determine which combination of the plurality of colors each patch image is and what the value of the toner coverage of each color is, thereby generating color conversion data or selecting color conversion data to be used from among a plurality of pieces of color conversion data generated in advance.

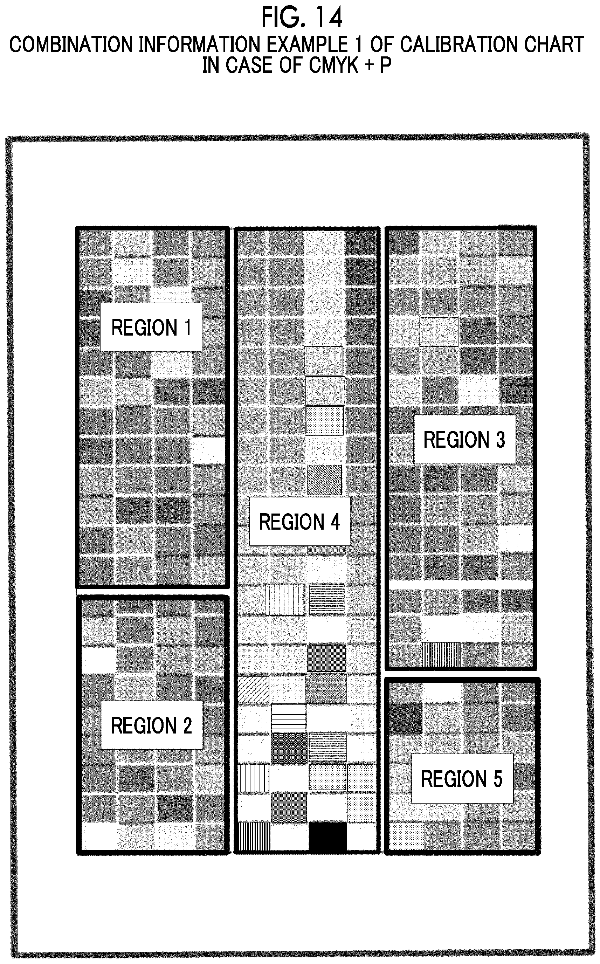

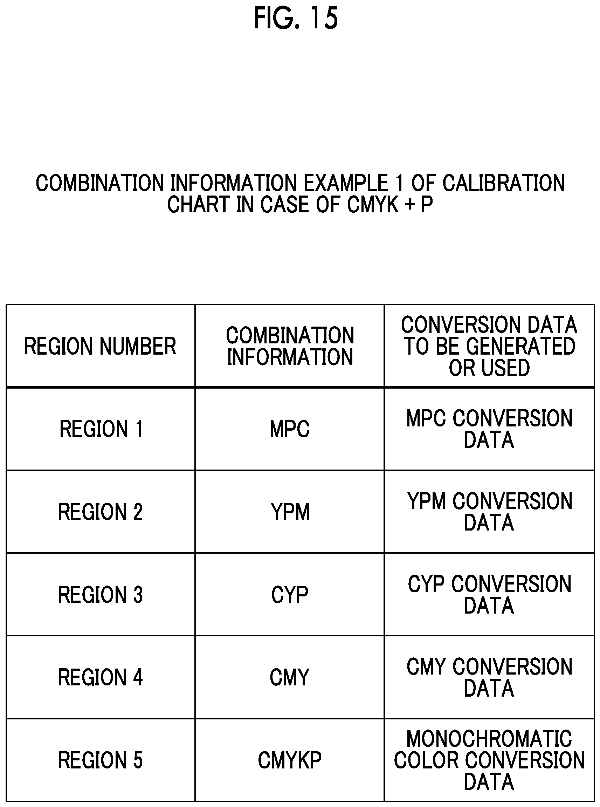

Figs. 14 and 15 show an example of the combination information of the patch images.

In Fig. 14, it can be seen that the calibration chart of CMYK+P colors is divided into regions 1 to 5. Fig. 15 shows a table showing which color combination each of the patch images in the regions 1 to 5 are composed of, which conversion data should be selected from the plurality of pieces of conversion data in a case where the RGB values are converted into the Lab values, and which conversion data the generated conversion data should be stored as. For example, it can be seen that the MPC conversion data should be selected in a case of converting the RGB values of the patch image in the region 1 into the Lab values, and the YPM conversion data should be selected in a case of converting the RGB values of the patch image in the region 2 into the Lab values.

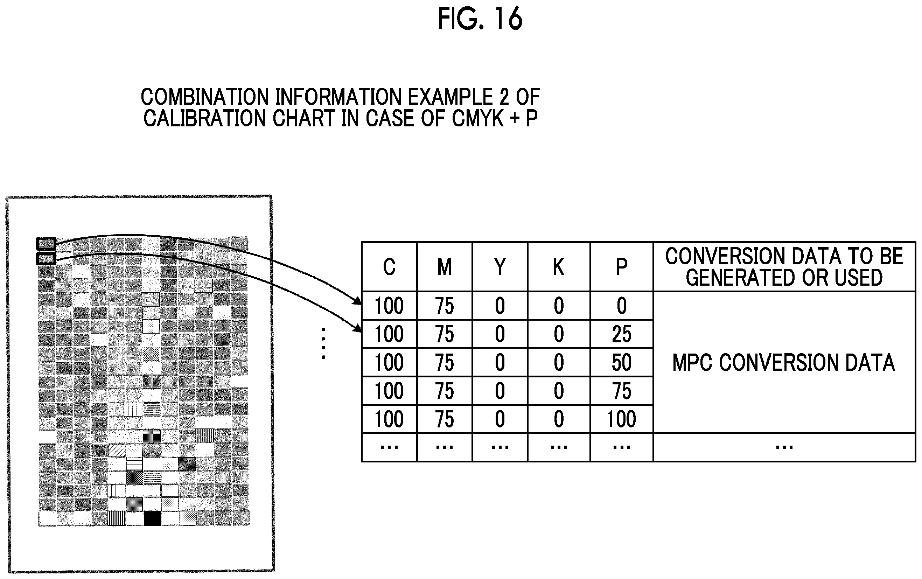

In addition, Fig. 16 shows an example of the combination information of this patch image.

Fig. 16 shows a case where the patch combination information includes information of the toner coverage. Fig. 16 shows a table for specifying the types of conversion data corresponding to the values of the toner coverage of the CMYKP colors in order from the upper left patch image as an example.

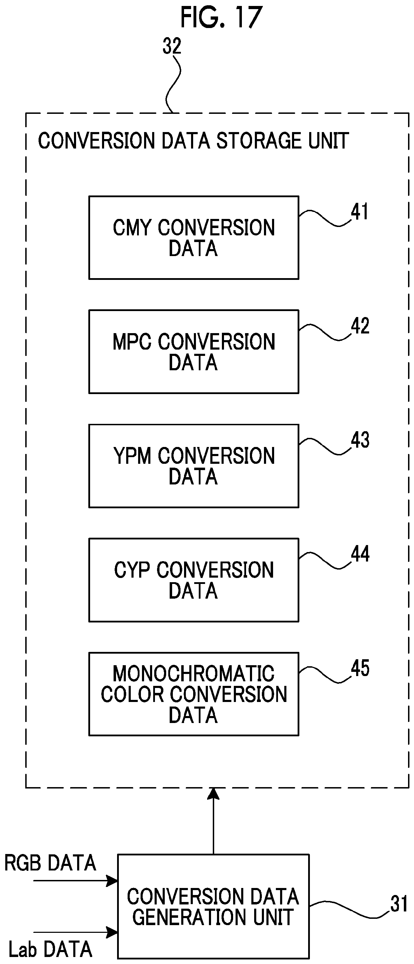

The conversion data generation unit 31 generates conversion data to be used in a case of converting the RGB values of each patch image into Lab values in accordance with the position of each patch image in the RGB data, based on the above combination information, and stores the generated conversion data in the conversion data storage unit 32. Fig. 17 shows a state where a plurality of pieces of conversion data generated by the conversion data generation unit 31 in this way are stored in the conversion data storage unit 32.

Fig. 17 shows a state where five pieces of conversion data of CMY conversion data 41, MPC conversion data 42, YPM conversion data 43, CYP conversion data 44, and monochromatic color conversion data 45 are stored in the conversion data storage unit 32.

In a case where the calibration is actually executed, the color conversion unit 33 selects conversion data used in a case of converting the RGB values of the patch image into the Lab values from the plurality of pieces of conversion data in accordance with the position of each patch image in the RGB data, based on the combination information as described above.

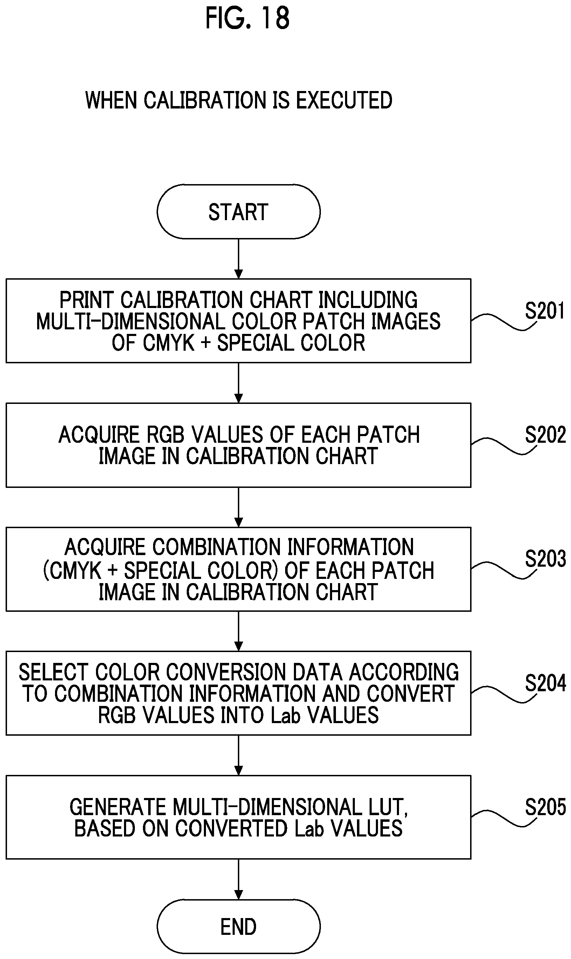

Next, a flow of a process in a case where calibration is executed in the terminal apparatus 10 according to the present exemplary embodiment will be described with reference to a flowchart of Fig. 18.

First, in step S201, the terminal apparatus 10 gives an instruction to the image forming apparatus 20 which is a calibration target to print a calibration chart including multi-dimensional color patch images of CMYK + special color (P) as shown in Fig. 13.

Next, in step S202, the color conversion unit 33 acquires RGB data obtained by reading the calibration chart printed by the image forming apparatus 20 by the image reading device of the image forming apparatus 60 to acquire the RGB values of each patch image. Then, in step S203, the color conversion unit 33 acquires the combination information of each patch image in the calibration chart as shown in Figs. 14 to 16.

Then, in step S204, in a case where the RGB values of each patch image are converted into the Lab values, the color conversion unit 33 sequentially executes a process of selecting the color conversion data according to the acquired combination information and converting the RGB values into the Lab values.

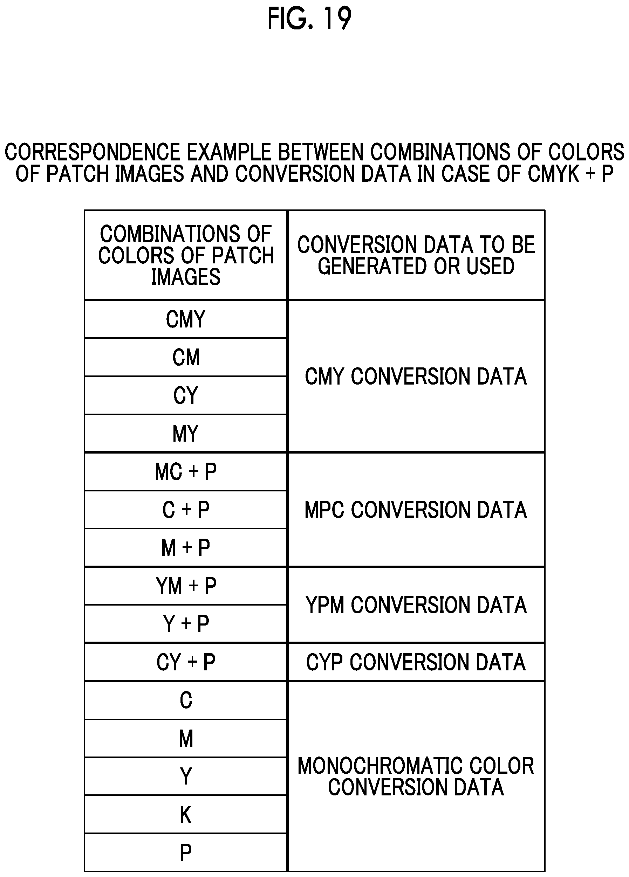

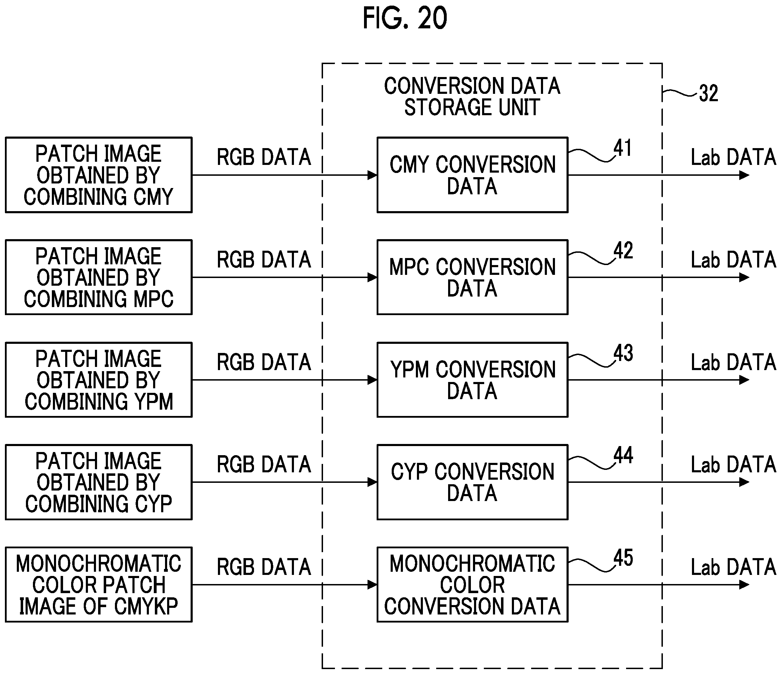

For example, Fig. 19 shows a correspondence example between combinations of colors of patch images and conversion data in a case of CMYK+P colors. Fig. 20 shows a state where patch images obtained by combining colors are converted into Lab values by using CMY conversion data 41, MPC conversion data 42, YPM conversion data 43, CYP conversion data 44, and monochromatic color conversion data 45.

For example, in the table shown in Fig. 19, it can be seen that the conversion data to be used in a case of converting the RGB values of the patch image of a three-dimensional color (CMYK) or two-dimensional colors (CM, CY, YM) of CMY colors into Lab values is CMY conversion data. Therefore, as shown in Fig. 20, the color conversion unit 33 selects the CMY conversion data 41 for the patch image obtained by combining CMY, and converts the RGB values into the Lab values.

In addition, in the table shown in Fig. 19, it can be seen that the conversion data to be used in a case of converting the RGB values of the patch image of the three-dimensional color (MCP) or the two-dimensional colors (CP and MP) of MCP colors into the Lab values is the MPC conversion data. Therefore, as shown in Fig. 20, the color conversion unit 33 selects the MPC conversion data 42 for the patch image obtained by combining MCP, and converts the RGB values into the Lab values.

Finally, in step S205, the multi-dimensional LUT generation unit 34 generates and outputs multi-dimensional LUT data for executing the calibration, based on the converted Lab values. By installing the multi-dimensional LUT in the image forming apparatus 20, calibration is executed such that the color of the image printed by the image forming apparatus 20 approaches the target color.

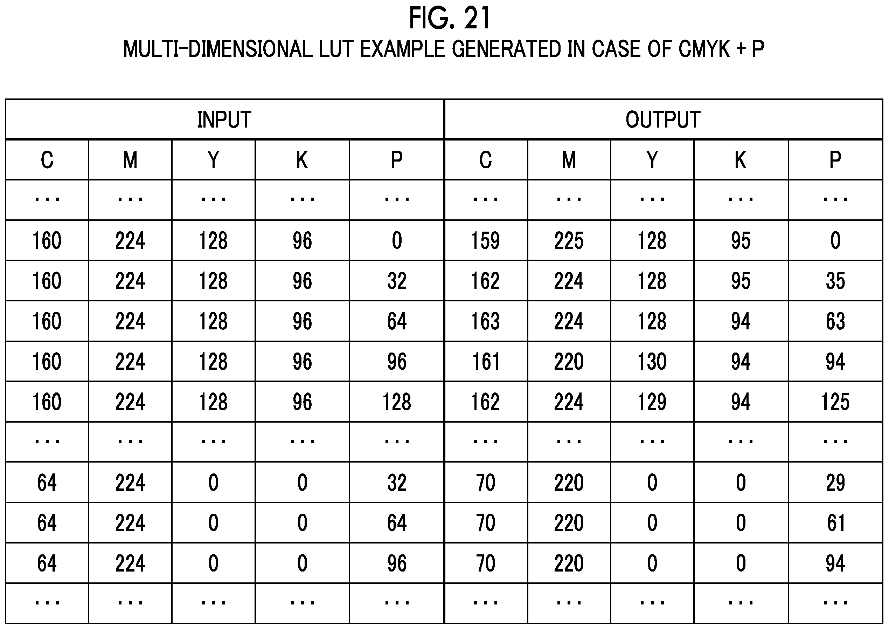

Fig. 21 shows a multi-dimensional LUT example generated by the multi-dimensional LUT generation unit 34 in this way.

Referring to Fig. 21, it can be seen that output values of CMYKP are associated with input values of CMYKP. In Fig. 21, a table in which combinations of nine values of 0, 32, 64, 96, 128, 160, 192, 224, and 255 among 256 levels of values from 0 to 255 for each color are input. In a case of generating the multi-dimensional LUT, the one-dimensional LUT is applied to a combination of the K color and the P color which is unlikely to be actually used.

In the above, a case where five color toners of CMYK+P colors are used has been described for simplicity, but the same is also applicable to a case where six color toners of CMYK+P+G colors are used.

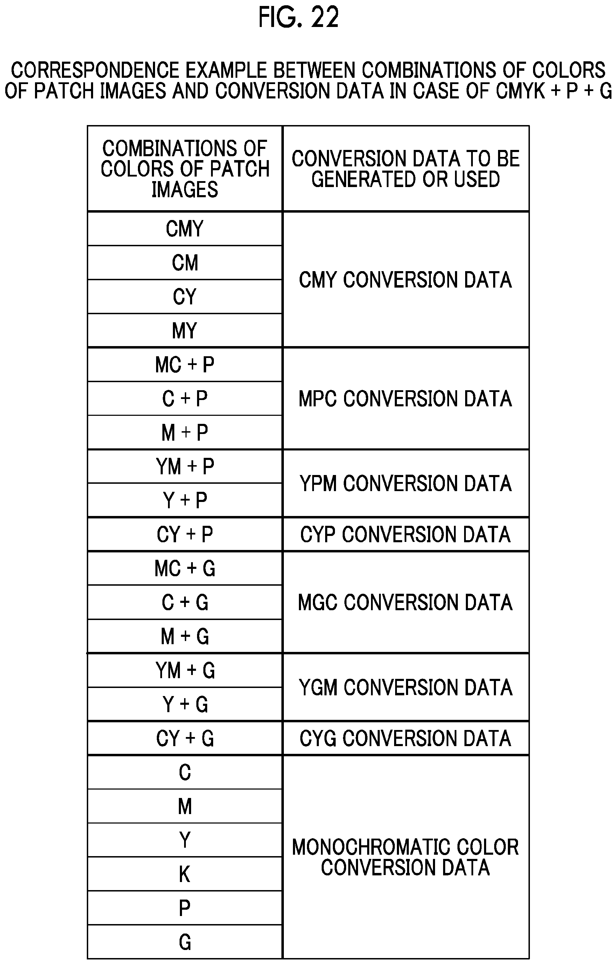

For example, Fig. 22 shows a correspondence example between combinations of colors of patch images and conversion data in a case of CMYK+P+G colors.

Referring to Fig. 22, it can be seen that in addition to the CMY conversion data, the MPC conversion data, the YPM conversion data, the CYP conversion data, and the monochromatic color conversion data, the MGC conversion data, the YGM conversion data, and the CYG conversion data are used. Since the P color and the G color are unlikely to be used at the same time, conversion data for a case where the two special colors PG are used at the same time is not required.

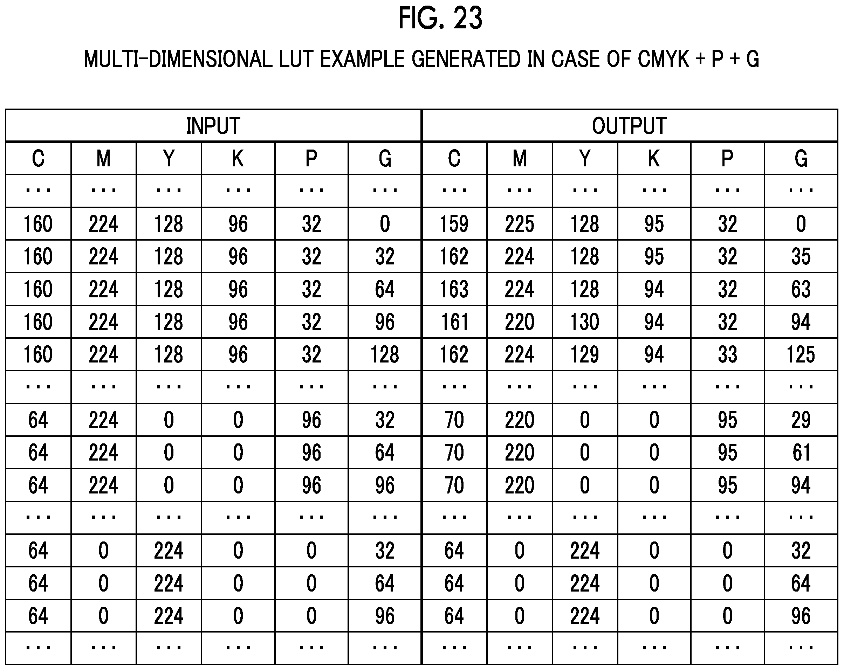

In addition, Fig. 23 shows a multi-dimensional LUT example generated in a case of CMYK+P+G colors. Referring to Fig. 23, it can be seen that output values of CMYKPG are associated with input values of CMYKPG.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The term "system" in the present exemplary embodiment includes both a system configured by a plurality of devices and a system configured by a single device.

### [Supplementary Notes]

Hereinafter, aspects of the present disclosure will be described.
(((1))) An information processing system comprising:
   a memory that stores a plurality of pieces of conversion data for converting RGB values into Lab values, for each combination of a plurality of colors, the plurality of pieces of conversion data being generated by using a calibration chart including multi-dimensional color patch images consisting of combinations of a plurality of basic colors and multi-dimensional color patch images consisting of combinations of a plurality of colors obtained by replacing any one color of the plurality of basic colors with a special color other than the basic colors; and
   a processor configured to:
      select, with respect to RGB values in a case where a patch image in the calibration chart is read by an image reading device, conversion data corresponding to the patch image from among the plurality of pieces of conversion data stored in the memory, in accordance with combination information indicating which of combination of the plurality of colors the patch image corresponds to;
      convert the read RGB values into Lab values by using the selected conversion data; and
      generate a multi-dimensional LUT for executing calibration by using the converted Lab values.
(((2))) The information processing system according to (((1))),
   wherein the multi-dimensional color patch images consisting of combinations of the plurality of basic colors are three or less dimensional color patch images consisting of combinations of CMY colors, and
   the multi-dimensional color patch images consisting of combinations of a plurality of colors obtained by replacing any one color of the plurality of basic colors with a special color are three or less dimensional color patch images consisting of combinations of three colors obtained by replacing any one color of the CMY colors with a special color other than the CMYK colors.
(((3))) The information processing system according to (((2))),
   wherein the plurality of pieces of conversion data include conversion data generated based on color values of a monochromatic color patch image of each of CMYK basic colors and special colors.
(((4))) The information processing system according to any one of (((1))) to (((3))),
   wherein the combination information includes page information indicating a page of the calibration chart of the patch image, position information indicating a position on the page, and colorant concentration information in a case where the patch image is output.
(((5))) The information processing system according to (((1))), wherein the processor is configured to:
   generate a three or less dimensional color combination portion among the combinations of the basic colors and the special colors, based on the Lab values, in a case of generating the multi-dimensional LUT by using the Lab values converted by using the selected conversion data.
(((6))) The information processing system according to (((5))), wherein the processor is configured to:
   generate a portion of a K color among the basic colors, based on the Lab values of a monochromatic color patch image, in a case of generating the multi-dimensional LUT by using the Lab values converted by using the selected conversion data.
(((7))) A program causing a computer to execute:
   storing a plurality of pieces of conversion data for converting RGB values into Lab values, for each combination of a plurality of colors, the plurality of pieces of conversion data being generated by using a calibration chart including multi-dimensional color patch images consisting of combinations of a plurality of basic colors and multi-dimensional color patch images consisting of combinations of a plurality of colors obtained by replacing any one color of the plurality of basic colors with a special color other than the basic colors;
   selecting, with respect to RGB values in a case where a patch image in the calibration chart is read by an image reading device, conversion data corresponding to the patch image from among the plurality of pieces of stored conversion data, in accordance with combination information indicating which of combination of the plurality of colors the patch image corresponds to;
   converting the read RGB values into Lab values by using the selected conversion data; and
   generating a multi-dimensional LUT for executing calibration by using the converted Lab values.

The effects of the supplementary notes will be described below.

According to the information processing system of (((1))), in a case of calibrating printing using a colorant of a special color other than the CMYK colors which are the basic colors, it is possible to convert the RGB values into the Lab values with high accuracy, compared to a case of converting RGB values into Lab values by using conversion data generated based on multi-dimensional color patch images in which only the basic colors are combined with each other.

According to the information processing system of (((2))), it is possible to suppress each patch image in the calibration chart to a three-or less dimensional color combination.

According to the information processing system of (((3))), the accuracy of the image formed by the monochromatic color colorant can be managed separately from the accuracy of the image formed by the multi-dimensional color colorant.

According to the information processing system of (((4))), the conversion data to be selected can be automatically specified in a case where the color values of each patch image in the calibration chart are read by the image reading device.

According to the information processing system of (((5))), it is possible to generate a multi-dimensional LUT even in a case where the Lab values of the patch images of all the combinations of the basic colors and the special colors are not present.

According to the information processing system of (((6))), even in a case where the Lab values of the multi-dimensional color patch image consisting of the combination of the K color and the special color are not present in the basic color, it is possible to generate the multi-dimensional LUT.

According to the program of (((7))), in a case of calibrating printing using a colorant of a special color other than the CMYK colors which are the basic colors, it is possible to convert the RGB values into the Lab values with high accuracy, compared to a case of converting RGB values into Lab values by using conversion data generated based on multi-dimensional color patch images in which only the basic colors are combined with each other.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: terminal apparatus
11: CPU
12: memory
13: storage device
14: communication interface
15: user interface device
16: control bus
20: image forming apparatus
21: image forming unit
22: intermediate transfer belt
23: primary transfer roll
24: optical scanning device
25: carrying-in port
26: secondary transfer device
27: fixing device
28: discharge port
29: transport path
30: network
31: conversion data generation unit
32: conversion data storage unit
33: color conversion unit
34: multi-dimensional LUT generation unit
40: colorimeter
41: CMY conversion data
42: MPC conversion data
43: YPM conversion data
44: CYP conversion data
45: monochromatic color conversion data
50, 51: calibration chart
60: image forming apparatus
81, 82: patch image

## Claims

1. An information processing system comprising:
a memory that stores a plurality of pieces of conversion data for converting RGB values into Lab values, for each combination of a plurality of colors, the plurality of pieces of conversion data being generated by using a calibration chart including multi-dimensional color patch images consisting of combinations of a plurality of basic colors and multi-dimensional color patch images consisting of combinations of a plurality of colors obtained by replacing any one color of the plurality of basic colors with a special color other than the basic colors; and
a processor configured to:
select, with respect to RGB values in a case where a patch image in the calibration chart is read by an image reading device, conversion data corresponding to the patch image from among the plurality of pieces of conversion data stored in the memory, in accordance with combination information indicating which of combination of the plurality of colors the patch image corresponds to;
convert the read RGB values into Lab values by using the selected conversion data; and
generate a multi-dimensional LUT for executing calibration by using the converted Lab values.

2. The information processing system according to claim 1,
wherein the multi-dimensional color patch images consisting of combinations of the plurality of basic colors are three or less dimensional color patch images consisting of combinations of CMY colors, and
the multi-dimensional color patch images consisting of combinations of a plurality of colors obtained by replacing any one color of the plurality of basic colors with a special color are three or less dimensional color patch images consisting of combinations of three colors obtained by replacing any one color of the CMY colors with a special color other than the CMYK colors.

3. The information processing system according to claim 2,
wherein the plurality of pieces of conversion data include conversion data generated based on color values of a monochromatic color patch image of each of CMYK basic colors and special colors.

4. The information processing system according to any one of claims 1 to 3,
wherein the combination information includes page information indicating a page of the calibration chart of the patch image, position information indicating a position on the page, and colorant concentration information in a case where the patch image is output.

5. The information processing system according to claim 1, wherein the processor is configured to:
generate a three or less dimensional color combination portion among the combinations of the basic colors and the special colors, based on the Lab values, in a case of generating the multi-dimensional LUT by using the Lab values converted by using the selected conversion data.

6. The information processing system according to claim 5, wherein the processor is configured to:
generate a portion of a K color among the basic colors, based on the Lab values of a monochromatic color patch image, in a case of generating the multi-dimensional LUT by using the Lab values converted by using the selected conversion data.

7. A program causing a computer to execute:
storing a plurality of pieces of conversion data for converting RGB values into Lab values, for each combination of a plurality of colors, the plurality of pieces of conversion data being generated by using a calibration chart including multi-dimensional color patch images consisting of combinations of a plurality of basic colors and multi-dimensional color patch images consisting of combinations of a plurality of colors obtained by replacing any one color of the plurality of basic colors with a special color other than the basic colors;
selecting, with respect to RGB values in a case where a patch image in the calibration chart is read by an image reading device, conversion data corresponding to the patch image from among the plurality of pieces of stored conversion data, in accordance with combination information indicating which of combination of the plurality of colors the patch image corresponds to;
converting the read RGB values into Lab values by using the selected conversion data; and
generating a multi-dimensional LUT for executing calibration by using the converted Lab values.

8. An information processing method comprising:
storing a plurality of pieces of conversion data for converting RGB values into Lab values, for each combination of a plurality of colors, the plurality of pieces of conversion data being generated by using a calibration chart including multi-dimensional color patch images consisting of combinations of a plurality of basic colors and multi-dimensional color patch images consisting of combinations of a plurality of colors obtained by replacing any one color of the plurality of basic colors with a special color other than the basic colors;
selecting, with respect to RGB values in a case where a patch image in the calibration chart is read by an image reading device, conversion data corresponding to the patch image from among the plurality of pieces of stored conversion data, in accordance with combination information indicating which of combination of the plurality of colors the patch image corresponds to;
converting the read RGB values into Lab values by using the selected conversion data; and
generating a multi-dimensional LUT for executing calibration by using the converted Lab values.
